# EUROPEAN PATENT APPLICATION

(11) **EP 3 998 685 A1**
(43) Date of publication of application: **18.05.2022**
(21) Application number: 19937689.8
(22) Date of filing: 12.07.2019
(51) Int. Cl.: H02B 13/055

(54) **GAS INSULATED ELECTRIC DEVICE**

(71) Applicant: MITSUBISHI ELECTRIC CORPORATION, Chiyoda-ku Tokyo 100-8310 (JP)
(72) Inventor: KAWANO, Ryoko, Tokyo 100-8310 (JP); YOSHIMURA, Manabu, Tokyo 100-8310 (JP)
(74) Representative: Trinks, Ole
(86) International application number: PCT/JP2019/027705
(87) International publication number: WO 2021/009803

(57) **Abstract**

A gas-insulated electrical apparatus according to the present invention comprises a grounded tank (1), a conductor (2) placed inside the grounded tank (1), and an insulation gas filling the grounded tank (1). The insulation gas is a mixed gas comprising a first gas mainly responsible for insulation performance and having a global warming potential less than 6500, and a second gas having a small molecular weight, a low insulation performance, and a low global warming potential, as compared to the first gas. The insulation performance of the insulation gas is lower than the insulation performance of the first gas at a same pressure.

## Description

### TECHNICAL FIELD

The present invention relates to a gas-insulated electrical apparatus.

### BACKGROUND ART

A gas-insulated electrical apparatus such as a gas-insulated switchgear maintains its insulation performance by accommodating a conductor, to which a high voltage is applied, inside a grounded tank made of metal and also by enclosing an insulation gas inside the grounded tank.

Conventionally, as an example of an insulation gas for use in such a gas-insulated electrical apparatus, SF₆ is known. SF₆ has a high insulation performance but also has a high global warming potential (GWP). Therefore, from the viewpoint of reducing environmental burdens, research has been conducted for finding another insulation gas to replace SF₆.

For example, PTL 1 (Japanese Patent Application Publication JP 2014-506 376 A) discloses a mixed gas including fluoroketone gas, air, and the like, as an insulation gas for use to guarantee insulation performance of a gas-insulated electrical apparatus, and this mixed gas has a GWP of 1 or less. The insulation performance of this mixed gas is higher than the arithmetic mean of the insulation performances of fluoroketone and air.

That is, when a plurality of gases is mixed, the resulting insulation performance is synergistically enhanced as compared to the sum of the insulation performances of the gases before mixed. In the present specification, this property is expressed as "having a synergism effect on insulation performance". In contrast, when a mixed gas made of a plurality of gases has an insulation performance that is equal to or less than the arithmetic mean of the insulation performances of the gases before mixed, it is expressed as "not having a synergism effect on insulation performance".

The insulation gas disclosed by PTL 1 is made by mixing fluoroketone gas (mainly responsible for insulation performance) with air and the like (having a low GWP), to decrease GWP without degrading the insulation performance.

Further, for example, NPL 1 discloses another insulation gas to replace SF₆, which is a mixed gas obtained by mixing C₃F₈, CF₄, and/or the like with N₂, CO₂, and/or the like having a low GWP.

### CITATION LIST

### PATENT LITERATURE

PTL 1: Japanese National Patent Application Publication JP 2014-506 376 A

### NON PATENT LITERATURE

NPL 1: IEEJ Transactions on Power and Energy, vol. 122 (2002), No. 9, pp. 1028-1034

### SUMMARY OF INVENTION

### TECHNICAL PROBLEM

As for the gas-insulated electrical apparatus disclosed by PTL 1, when the insulation gas leaks from the grounded tank due to long-term use and/or the like, air (with a smaller molecular weight) leaks earlier than fluoroketone does. Because the insulation gas (mixed gas) disclosed by PTL 1 has a synergism effect on insulation performance, the earlier leak of air, alone, causes a significant degradation of the insulation performance.

In this regard, the insulation gas disclosed by NPL 1 is a mixed gas that does not have a synergism effect on insulation performance, but C₃F₈, CF₄, and the like have global warming potentials (GWPs) from 6500 to 7000; these GWPs are lower than the GWP of SF₆ but there is still a demand for use of an insulation gas that has an even lower GWP with low environmental burdens.

The present invention has been devised to solve the above-described problems, and has an object to provide a gas-insulated electrical apparatus that makes it possible to, even when the insulation gas leaks from the grounded tank due to long-term use and/or the like, suppress the degradation of insulation performance and that has low environmental burdens.

### SOLUTION TO PROBLEM

A gas-insulated electrical apparatus according to the present invention comprises:
a grounded tank;
a conductor placed inside the grounded tank; and
an insulation gas filling the grounded tank.

The insulation gas is a mixed gas comprising:
a first gas mainly responsible for insulation performance and having a global warming potential less than 6500; and
a second gas having a small molecular weight, a low insulation performance, and a low global warming potential, as compared to the first gas.

The insulation performance of the insulation gas is lower than the insulation performance of the first gas at a same pressure.

### ADVANTAGEOUS EFFECTS OF INVENTION

In the present invention, as an insulation gas filling the grounded tank of the gas-insulated electrical apparatus, a mixed gas is used that comprises a first gas mainly responsible for insulation performance and a second gas having a smaller molecular weight than the first gas. With this configuration, even when the insulation gas leaks from the grounded tank due to long-term use and/or the like, the second gas having a smaller molecular weight than the first gas leaks before the first gas does, and the first gas mainly responsible for insulation performance tends not to leak.

Therefore, the absolute amount of the first gas tends not to decrease even after a long-term use. And because the second gas has a lower insulation performance than the first gas and there is no synergism effect on the insulation performance, even when the second gas leaks, as long as the decrease in the absolute amount of the first gas is small, degradation of insulation performance of the insulation gas after a long-term use is suppressed.

Further, both the first gas and the second gas have relatively low GWPs, and therefore the insulation gas has a lower GWP than a conventional insulation gas.

Thus, the present invention allows for providing a gas-insulated electrical apparatus that makes it possible to, even when the insulation gas leaks from the grounded tank due to long-term use and/or the like, suppress degradation of insulation performance and that has low environmental burdens.

### BRIEF DESCRIPTION OF DRAWINGS

- FIG. 1: shows a schematic configuration of a gas-insulated electrical apparatus according to Embodiment 1 of the present invention.
- FIG. 2: is a schematic graph for explaining a synergism effect on insulation performance of a mixed gas regarding Embodiment 1 of the present invention.
- FIG. 3: is another schematic graph for explaining a synergism effect on insulation performance of a mixed gas regarding Embodiment 1 of the present invention.
- FIG. 4: is another schematic graph for explaining a synergism effect on insulation performance of a mixed gas regarding Embodiment 1 of the present invention.
- FIG. 5: is another schematic graph for explaining a synergism effect on insulation performance of a mixed gas regarding Embodiment 1 of the present invention.
- FIG. 6: is a schematic graph for explaining Embodiment 4 of the present invention.
- FIG. 7: is a schematic graph for explaining Embodiment 5 of the present invention.

### DESCRIPTION OF EMBODIMENTS

In the following, a description will be given of embodiments of the present invention, with reference to drawings. In the drawings of the present invention, the same or equivalent members are denoted by the same reference numerals. Dimensions in the drawings, including length, width, thickness, and depth, may have been changed from the actual dimensions as appropriate for the clarification and simplification of the drawings, and therefore, the dimensions may not agree with the actual dimensions. In the drawings, the first gas is expressed as "Gas A" or simply "A", and the second gas is expressed as "Gas B" or simply "B".

### Embodiment 1.

A gas-insulated electrical apparatus according to Embodiment 1 of the present invention will be described.

### Gas-Insulated Electrical Apparatus

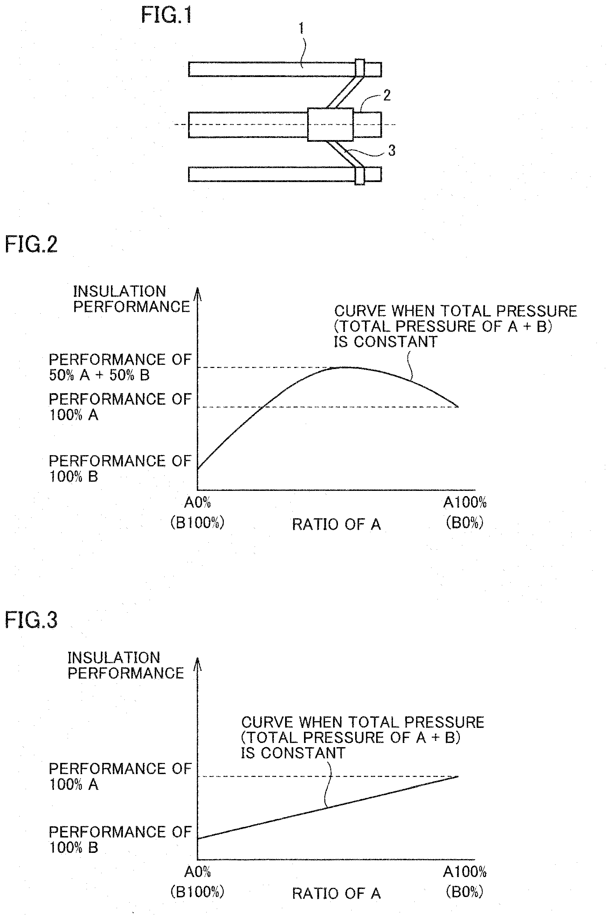

FIG. 1 shows a schematic configuration of a gas-insulated electrical apparatus according to Embodiment 1 of the present invention. In FIG. 1, as an example of the gas-insulated electrical apparatus, a gas-insulated switchgear is illustrated.

The gas-insulated electrical apparatus shown in FIG. 1 comprises a grounded tank 1, a conductor 2 placed inside grounded tank 1, and an insulation gas (not shown) filling grounded tank 1.

In FIG. 1, conductor 2 is supported by an electrically insulating support member 3 so that it is insulated from grounded tank 1. To conductor 2, a high voltage is applied. Grounded tank 1 is a vessel, a space, and the like that is airtight.

The gas-insulated electrical apparatus may comprise electrical or electromechanical equipment that is placed electrically in series or in parallel to a circuit (an electric circuit) including conductor 2. Examples of the electrical or electromechanical equipment include a switchgear, a breaker, a disconnector, and the like for cutting the circuit, and a transformer, a resistance, a reactor, a capacitor, and the like for changing the voltage of the circuit.

An insulation material placed inside or outside such equipment as a switchgear, a breaker, a disconnector, a transformer, a resistance, a reactor, and a capacitor (an insulation material except for the one placed inside grounded tank 1) may be the same mixed gas as the insulation gas filling grounded tank 1 or may be other insulation gases. Examples of that other insulation gases include dry air, CO₂, N₂, O₂, H₂, helium, SF₆, or a mixed gas of these.

The insulation material except for the one placed inside the grounded tank 1 may be an insulation solid, an insulation oil, and/or an insulation gel. The inside or outside of the equipment may be insulated by a vacuum.

Examples of the insulation solid include electrically insulating resin materials and rubber materials. Examples of the electrically insulating resin materials include thermoplastic resins and thermosetting resins. Examples of the thermoplastic resins include vinyl-chloride-based resins, polyester-based resins, and nylon-based resins. Examples of the thermosetting resins include epoxy-based resins, urethane-based resins, and acrylic-based resins. Examples of the insulation oil include mineral oil, plant-based oil, animal-based oil, and Fluorinert.

### Insulation Gas

Next, the insulation gas filling grounded tank 1 will be described in detail.

In the present embodiment, the insulation gas is a mixed gas comprising a first gas and a second gas. Each of the insulation gas, the first gas, and the second gas may include a small amount of another gas, such as a gas that is mixed during each preparation, as long as the effects of the invention are exhibited.

### First Gas

The first gas is mainly responsible for insulation performance, and has a global warming potential (which may also be abbreviated as "GWP") of less than 6500. The expression "mainly responsible for insulation performance" means that the insulation performance of the first gas contributes the most to the insulation performance of the insulation gas.

The GWP of the first gas is less than 6500, preferably 1000 or less, more preferably 500 or less, further preferably 150 or less, most preferably 10 or less.

As a mixed gas not having a synergism effect on insulation performance (an insulation gas), NPL 1 describes mixed gases of C₃F₈, CF₄, and/or the like with N₂, CO₂, and/or the like, for example. Here, C₃F₈, CF₄, and the like have relatively high global warming potentials (GWPs), which are from 6500 to 7000. In contrast to this, each of the first gas and the second gas used in the present embodiment has a GWP less than 6500, capable of providing an insulation gas with lower environmental burdens than conventional ones.

### Second Gas

The second gas has a small molecular weight and a low insulation performance as compared to the first gas. The molecular weight of the second gas is preferably 300 or less, more preferably 200 or less, further preferably 100 or less.

The GWP of the second gas is lower than the GWP of the first gas, and is preferably 1000 or less, more preferably 500 or less, further preferably 150 or less, most preferably 10 or less. This makes it possible to, when the first gas is mixed with the second gas, lower the GWP of the insulation gas and lower the environmental burdens.

### Insulation Performance

The insulation performance of the insulation gas is lower than the insulation performance of the first gas at the same pressure.

The insulation performance may be measured by, for example, a withstand voltage performance evaluation which involves causing insulation breakdown in gas, and may be expressed as a numerical value in terms of breakdown voltage. The higher the breakdown voltage value is, the higher the insulation performance may be rated. The withstand voltage performance evaluation is an evaluation that uses, for example, a coaxial cylindrical test system which mimics an actual apparatus, as well as a voltage waveform which mimics a waveform that can be applied to the actual apparatus (such as DC voltage, AC voltage, and/or pulsed voltage, for example).

Next, referring to FIG. 2 to FIG. 5, a description will be given of the difference between an insulation gas (a mixed gas) having a synergism effect of the first gas (A) and the second gas (B) on insulation performance and an insulation gas not having a synergism effect on insulation performance.

In the case shown in FIG. 2, for example, the insulation performance of a mixed gas composed of 50 mol% first gas and 50 mol% second gas is higher than that of the first gas alone (a gas consisting of 100 % first gas) at the same pressure. In this case, the mixed gas has a synergism effect on insulation performance.

Although the above example is about a mixed gas composed of 50 % first gas and 50 % second gas, the presence or absence of the synergism effect of the first gas and the second gas on insulation performance does not rely on the mixing ratio of the first gas and the second gas.

In contrast to the above case, in the case shown in FIG. 3, for example, the insulation performance of the mixed gas is in a linear relationship with the ratio of the first gas in the mixed gas. In this case, the insulation performance of the mixed gas composed of the first gas and the second gas appears to be lower than the insulation performance of the first gas alone at the same pressure. In the present specification, this phenomenon is expressed as "not having a synergism effect of the first gas and the second gas on insulation performance".

In the present embodiment, as for an insulation gas (a mixed gas) not having a synergism effect on insulation performance, the insulation performance of the mixed gas is not necessarily required to be in a linear relationship with the mixing ratio of the first gas and the second gas. As mentioned above, regardless of the mixing ratio of the mixed gas, the only requirement is that the insulation performance of the insulation gas is lower than the insulation performance of the first gas at the same pressure.

Since the mixed gas of the first gas and the second gas according to the present invention does not have a synergism effect on insulation performance, it has characteristics such as those shown in FIG. 3, for example. Ideally, the insulation performance of a mixed gas not having a synergism effect on insulation performance is determined solely by the insulation performance of the mixed amount of the first gas and the insulation performance of the mixed amount of the second gas, but depending on the temperature, volume, pressure, purity, and other chemical conditions of each gas to be mixed, the insulation performance of the mixed gas can be higher or lower than the simple addition (the arithmetic mean) of the insulation performance of the first gas and the insulation performance of the second gas.

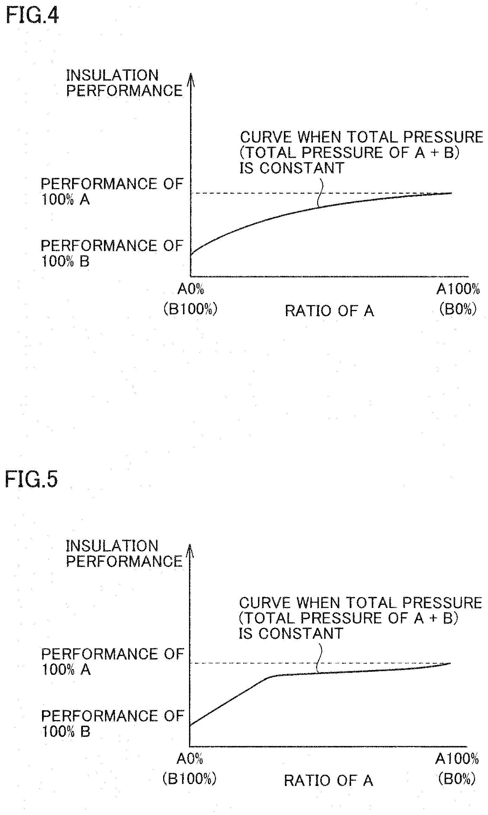

Further, at a certain pressure, the change in the insulation performance of the mixed gas may not always be in a linear relationship with the change in the ratio of the first gas in the mixed gas. For this reason, even a gas exhibiting the results shown in FIG. 4 and FIG. 5, for example, as long as it satisfies the above-described requirements for a mixed gas to be regarded as "not having a synergism effect on insulation performance", is regarded as an insulation gas not having a synergism effect on insulation performance (where the insulation performance of the insulation gas is lower than the insulation performance of the first gas at the same pressure).

Next, a description will be given of the degradation of insulation performance caused by a leak of the mixed gas including the first gas and the second gas. Generally speaking, the maximum pressure at which a gas can remain in a gas state (not become liquid) (the saturated vapor pressure) increases along with the increase in temperature.

In a case where a gas leak occurs in the gas-insulated electrical apparatus according to the present invention due to long-term use and/or the like, because typically a gas with a smaller molecular weight readily leaks, the amount of the second gas in the insulation gas decreases before the amount of the first gas does so.

In this case, if the insulation gas is a mixed gas having a synergism effect on insulation performance, insulation performance from the synergism effect is added to the arithmetic mean of the insulation performance of the first gas and the insulation performance of the second gas. Because of this, when the amount of the second gas decreases, both the insulation performance of the second gas alone and the insulation performance from the synergism effect decrease, and thereby the insulation performance of the insulation gas decreases by a great margin.

In contrast to this, as for the insulation gas according to the present invention which is a mixed gas not having a synergism effect on insulation performance, a decrease in the amount of the second gas can cause a decrease in the insulation performance of the second gas alone but tends not to cause a decrease in the insulation performance of the insulation gas. Therefore, even when the gas pressure has decreased due to a leak and the like, degradation of the insulation performance of the insulation gas may be suppressed and, thereby, a rapid deterioration in insulation is not expected to occur in the gas-insulated electrical apparatus.

The partial pressure of the first gas inside grounded tank 1 is preferably equal to or less than the saturated vapor pressure of the first gas at a lowest temperature for using the gas-insulated electrical apparatus. Similarly, the partial pressure of the second gas inside grounded tank 1 is preferably equal to or less than the saturated vapor pressure of the second gas at a lowest temperature for using the gas-insulated electrical apparatus.

When the partial pressures (the absolute amounts) of the first gas and the second gas in the insulation gas filling the grounded tank are adjusted in the above manner, the insulation gas remains in a gas state (not become liquid) while the gas-insulated electrical apparatus is being used, allowing the insulation performance and the pressure of the insulation gas to remain constant. For this reason, the insulation performance of the gas-insulated electrical apparatus is easily retained during use.

For example, 1233zd(E), described below as an example of the first gas, is a gas represented by the composition formula CF₃C₂H₂Cl. In a case where the lowest temperature for using the gas-insulated electrical apparatus is 0 °C, for example, and because the saturated vapor pressure of 1233zd(E) at 0 °C is 0.048 MPa, it is preferable that the partial pressure of the first gas (1233zd(E)) inside grounded tank 1 be 0.048 MPa or less. When the gas-insulated electrical apparatus is operated at a lower temperature, the amount of the first gas (1233zd(E)) added to full the grounded tank may be adjusted so as to lower the partial pressure of the first gas.

### Embodiment 2.

In Embodiment 2, the first gas has a GWP of 10 or less, consists of a molecule including at least one element selected from the group consisting of hydrogen, carbon, fluorine, oxygen, chlorine, nitrogen, and phosphorus, and has a saturated vapor pressure of more than 0 MPa at a lowest temperature for using the gas-insulated electrical apparatus. The other conditions are the same as in Embodiment 1, so the description thereof will not be repeated.

In the present embodiment, both the GWP of the first gas and the GWP of the second gas are 10 or less, allowing for lowering environmental burdens by a great margin.

### First Gas

In the present embodiment, the first gas consists of a molecule including at least one element selected from the group consisting of hydrogen, carbon, fluorine, oxygen, chlorine, nitrogen, and phosphorus. The molecule constituting the first gas preferably includes hydrogen, carbon, and fluorine, more preferably includes hydrogen, carbon, fluorine, and chlorine.

Moreover, the first gas has a saturated vapor pressure of more than 0 MPa at a lowest temperature for using the gas-insulated electrical apparatus. Because of this, the first gas remains in a gas state (not become liquid) while the gas-insulated electrical apparatus is being used, allowing the insulation performance of the insulation gas to be maintained.

Examples of the first gas include hydrofluoroolefin gases. Examples of the hydrofluoroolefin gases include 1234yf, 1234ze(E), and 1233ze(Z). Each of 1234yf, 1234ze(E), and 1233ze(Z) has a GWP of 10 or less. For example, 1234yf has a GWP of 1 or less, 1234ze(E) has a GWP of 10 or less, and 1233ze(Z) has a GWP of 1 or less.

The first gas preferably includes at least one selected from the group consisting of 1234yf, 1234ze, and 1233zd(E).

Generally, these gases do not have a synergism effect on insulation performance with the second gas such as N₂, CO₂, dry air, O₂, and H₂, and therefore, even when the second gas leaks due to long-term use and/or the like, as long as the decrease in the amount of the first gas is small, insulation performance of the first gas is maintained and degradation of the insulation performance of the insulation gas is suppressed more reliably.

### Embodiment 3.

In Embodiment 3, the boiling point of the second gas at atmospheric pressure is lower than the lowest temperature for using the gas-insulated electrical apparatus. The other conditions are the same as in Embodiments 1 and 2, so the description thereof will not be repeated.

In general, when the amount of the insulation gas filling the grounded tank is increased and the pressure of the insulation gas inside the grounded tank is increased, the insulation performance of the insulation gas may be further enhanced. As described above, the partial pressure of the first gas mainly responsible for insulation performance is preferably equal to or less than the saturated vapor pressure of the first gas at a lowest temperature for using the gas-insulated electrical apparatus, and for enhancing the insulation performance of the insulation gas, the partial pressure of the second gas is preferably as high as possible as long as the second gas does not become liquid while the gas-insulated electrical apparatus is being used.

Also for allowing the second gas to leak preferentially upon a leak of the insulation gas due to long-term use and/or the like of the gas-insulated electrical apparatus, the partial pressure of the second gas is preferably as high as possible.

In the present embodiment, when a low-boiling gas is used as the second gas, it is possible to fill the insulation gas to a higher pressure (to a pressure higher than atmospheric pressure). This makes it possible to further enhance the insulation performance of the gas-insulated electrical apparatus.

Moreover, because the second gas leaks preferentially upon a leak of the insulation gas due to long-term use and/or the like of the gas-insulated electrical apparatus, degradation of the insulation performance of the insulation gas can be suppressed more reliably. This makes it possible to further enhance the insulation performance of the gas-insulated electrical apparatus.

Examples of the second gas include dry air (boiling point at atmospheric pressure, - 190 °C), CO₂ (boiling point at atmospheric pressure, -78.5 °C), N₂ (boiling point at atmospheric pressure, -195.8 °C), O₂ (boiling point at atmospheric pressure, -183 °C), H₂ (boiling point at atmospheric pressure, -252.8 °C), helium (boiling point at atmospheric pressure, -268.9 °C), or a mixed gas of these.

The second gas preferably includes at least one selected from the group consisting of N₂, CO₂, dry air, O₂, and H₂. Generally, these gases do not have a synergism effect on insulation performance with the first gas such as a hydrofluoroolefin gas, and their insulation performance is sufficiently lower than that of the first gas. Therefore, even when the second gas leaks due to long-term use and/or the like, as long as the decrease in the amount of the first gas is small, insulation performance of the first gas is maintained and degradation of the insulation performance of the insulation gas is suppressed more reliably.

### Embodiment 4.

In Embodiment 4, the mixing ratio of the first gas and the second gas in the insulation gas (mixed gas) is adjusted to a ratio within the range where it is obvious that no synergism effect on insulation performance is exhibited. The other conditions are the same as in Embodiments 1 to 3, so the description thereof will not be repeated.

In the present embodiment, the mixing ratio of the first gas and the second gas in the insulation gas is preferably within the range where the insulation performance of the insulation gas is higher than the insulation performance of one of the first gas and the second gas that has a higher ratio in the insulation gas, and where it is obvious that no synergism effect on insulation performance is exhibited.

FIG. 3 is a schematic graph of a case where the total pressure of the insulation gas (mixed gas) is constant, in which the ratio of the first gas (gas A) in the insulation gas is on the horizontal axis and the insulation performance of the insulation gas is on the vertical axis. FIG. 3 shows that, at any mixing ratio, the insulation performance of the insulation gas is lower than the insulation performance of the first gas (performance of 100 % A) at the same pressure.

An insulation gas having such properties does not have a synergism effect on insulation performance. A case like the one in FIG. 3 where the insulation performance of the insulation gas is proportional (or changes linearly) to the ratio of the first gas is a typical example of no synergism effect on insulation performance.

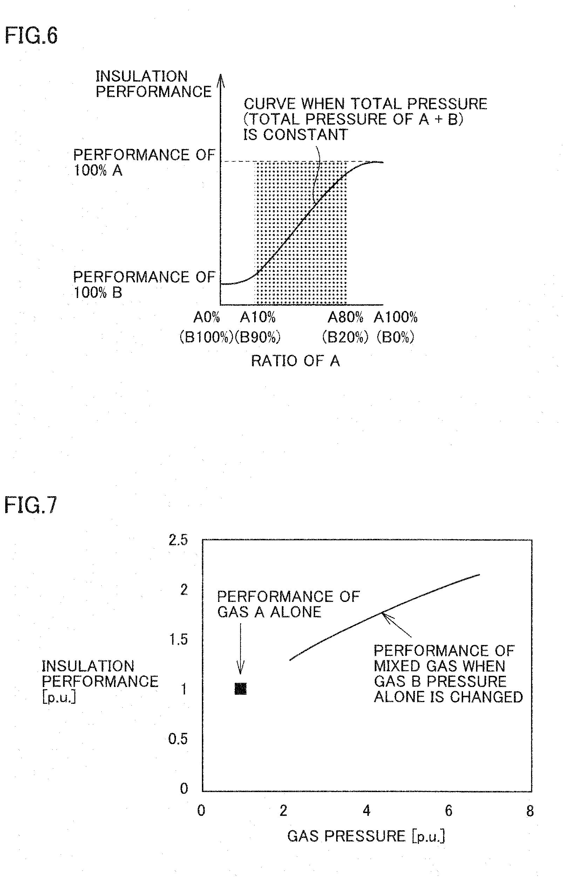

With respect to another case in which the first gas is a hydrofluoroolefin gas and the second gas is CO₂, for example, the relationship between the ratio of the hydrofluoroolefin gas and the insulation performance of the mixed gas is shown in the schematic graph of FIG. 6. As indicated in FIG. 6, the insulation performance of the insulation gas changes linearly within the range of the ratio of the first gas from 10 % to 80 %. It is obvious that, within this range, the insulation gas does not have a synergism effect on insulation performance.

More specifically, for example, the ratio (such as the molar ratio, the partial pressure ratio, and/or the like) of one of the first gas and the second gas of the insulation gas that has a lower ratio in the insulation gas to the other gas that has a higher ratio in the insulation gas is preferably from 10 % to 80 %, more preferably from 10 % to 70 %, further preferably from 10 % to 60 %.

Moreover, in the insulation gas filling the grounded tank, the ratio of the first gas in the insulation gas is preferably from 10 % to 80 %, more preferably from 10 % to 70 %, further preferably from 10 to 60%.

Referring to FIG. 6, when the ratio of the first gas is from 0 % to 10 % or from 80 % to 100 %, the insulation performance of the gas that has a higher ratio is dominant, relatively narrowing the difference between the insulation performance of the gas that has a higher ratio and the insulation performance of the mixed gas (the insulation gas). Therefore, within this range of mixing ratio, it is impossible to determine whether the synergism effect on insulation performance is present.

When "it is obvious that no synergism effect on insulation performance is exhibited", it is preferable that, for example, when the ratio of the first gas is higher than that of the second gas in the insulation gas, the index of the insulation performance of the insulation gas (which is the above-described breakdown voltage) be 105 % or more as compared to the same index of the first gas at the same pressure.

### Embodiment 5.

In this Embodiment 5, in the insulation gas filling grounded tank 1, the rate of change in insulation performance of the insulation gas at the time of 10 % change in the partial pressure of the second gas is equal to or less than 5 %. The other conditions are the same as in Embodiments 1 to 4, so the description thereof will not be repeated.

FIG. 7 shows changes in the insulation performance of the insulation gas when the partial pressure of the second gas is changed by increasing the amount of the second gas mixed with a certain amount of the first gas. In FIG. 7, the unit (p.u.) on the vertical axis is of the breakdown voltage, and the unit (p.u.) on the horizontal axis is of the gas pressure at the time of breakdown voltage measurement.

Referring to FIG. 7, even when the pressure of the second gas changes by 10 %, for example, the rate of change in insulation performance is not greater than 5 %. That is, even when a leak of the insulation gas occurs due to long-term use and/or the like of the gas-insulated electrical apparatus and the second gas mainly leaks, degradation of the insulation performance of the gas-insulated electrical apparatus can still be suppressed.

As described above, in the gas-insulated electrical apparatus according to the present embodiment, insulation performance tends not to degrade even when the amount of the second gas decreases due to a leak, and therefore degradation of insulation performance can be suppressed more reliably.

It should be construed that embodiments disclosed herein are given by way of illustration in all respects, not by way of limitation. It is intended that the scope of the present invention is defined by claims, not by the above description, and encompasses all modifications and variations equivalent in meaning and scope to the claims.

### LIST OF REFERENCE SIGNS

- 1: grounded tank,
- 2: conductor,
- 3: insulating support member.

## Claims

1. A gas-insulated electrical apparatus comprising:
- a grounded tank;
- a conductor placed inside the grounded tank; and
- an insulation gas filling the grounded tank, wherein
the insulation gas is a mixed gas comprising:
- a first gas mainly responsible for insulation performance and having a global warming potential less than 6500; and
- a second gas having a small molecular weight, a low insulation performance, and a low global warming potential, as compared to the first gas, and
- an insulation performance of the insulation gas is lower than the insulation performance of the first gas at a same pressure.

2. The gas-insulated electrical apparatus according to claim 1,
wherein the first gas has a global warming potential of 10 or less, consists of a molecule including at least one element selected from the group consisting of hydrogen, carbon, fluorine, oxygen, chlorine, nitrogen, and phosphorus, and has a saturated vapor pressure of more than 0 MPa at a lowest temperature for using the gas-insulated electrical apparatus.

3. The gas-insulated electrical apparatus according to claim 2,
wherein the first gas is a hydrofluoroolefin gas.

4. The gas-insulated electrical apparatus according to claim 3,
wherein the hydrofluoroolefin gas includes at least one selected from the group consisting of 1234yf, 1234ze, and 1233zd(E).

5. The gas-insulated electrical apparatus according to any one of claims 1 to 4,
wherein a boiling point of the second gas at atmospheric pressure is lower than the lowest temperature for using the gas-insulated electrical apparatus.

6. The gas-insulated electrical apparatus according to claim 5,
wherein the second gas includes at least one selected from the group consisting of N₂, CO₂, dry air, O₂, and H₂.

7. The gas-insulated electrical apparatus according to any one of claims 1 to 6,
wherein, in the insulation gas filling the grounded tank, the ratio of the first gas in the insulation gas is from 10 % to 80 %.

8. The gas-insulated electrical apparatus according to any one of claims 1 to 7,
wherein, in the insulation gas filling the grounded tank, a rate of change in insulation performance of the insulation gas at the time of 10 % change in a partial pressure of the second gas is equal to or less than 5 %.
